# EUROPEAN PATENT SPECIFICATION

(11) **EP 3 497 546 B1**
(45) Date of publication and mention of the grant of the patent: **06.10.2021**
(21) Application number: 17840126.1
(22) Date of filing: 08.08.2017
(51) Int. Cl.: G06F 3/01, B60K 35/00

(54) **RADAR-BASED GESTURAL INTERFACE**
RADARBASIERTE GESTENBASIERTE BENUTZEROBERFLÄCHE
INTERFACE GESTUELLE À BASE DE RADAR

(30) Priority: 09.08.2016 US 201662372641 P
(43) Date of publication of application: 19.06.2019
(73) Proprietor: Google LLC, Mountain View, CA 94043 (US)
(72) Inventor: ROTHERA, Alexander Harrison, Mountain View California 94043 (US); LANGE, Scott Daniel, Mountain View California 94043 (US)
(74) Representative: Anderson, Oliver Ben
(86) International application number: PCT/US2017/045841
(87) International publication number: WO 2018/031516

(56) References cited:
- WO-A1-2015/062751
- CN-A- 105 183 331
- US-A1- 2015 277 569
- PAVLO MOLCHANOV ET AL: "Multi-sensor system for driver's hand-gesture recognition", 2015 11TH IEEE INTERNATIONAL CONFERENCE AND WORKSHOPS ON AUTOMATIC FACE AND GESTURE RECOGNITION (FG), 8 May 2015 (2015-05-08), pages 1-8, XP055286586, DOI: 10.1109/FG.2015.7163132 ISBN: 978-1-4799-6026-2
- MOLCHANOV PAVLO ET AL: "Short-range FMCW monopulse radar for hand-gesture sensing", 2015 IEEE RADAR CONFERENCE (RADARCON), IEEE, 10 May 2015 (2015-05-10), pages 1491-1496, XP032788560, DOI: 10.1109/RADAR.2015.7131232 [retrieved on 2015-06-22]
- MOLCHANOV P. ET AL.: 'Multi-sensor System for Driver's Hand-Gesture Recognition' 11TH IEEE INTERNATIONAL CONFERENCE AND WORKSHOPS ON AUTOMATIC FACE AND GESTURE RECOGNITION 08 May 2015, pages 1 - 8, XP055286586

## Description

### FIELD

The present specification is related generally to a radar-based gestural interface.

### BACKGROUND

Presently, 8 people every day on average are killed in the United States in crashes reported to involve distracted drivers, and 1,161 injured. Driver distraction is increasingly becoming problematic with the ubiquity of smartphones, the preference for texting over calling, the need for GPS navigation via mobile phones, and the plethora of new notifications.

Dashboard interfaces, or tertiary tasks have been the main focus of conventional interfaces for years and generally the standard for cars. The dashboard interfaces are predictable and provide feedback in the form of mechanical switches/buttons, but are both away from the line-of-sight for the driver and also fixed in functionality. The use of touchscreens has increased in recent years to become standard in higher end cars. Although touchscreens allow many more configurable controls, they require complete eye contact without providing any tangible feedback.

WO2015062751 describes a method for operating a device for the contactless detection of objects and/or persons and their gestures and/or of control operations in a vehicle interior, said detection being carried out by an optical detection unit.

P. Molchanov, S. Gupta, K. Kim and K. Pulli: "Multi-sensor system for driver's hand-gesture recognition" (2015 11th IEEE International Conference and Workshops on Automatic Face and Gesture Recognition (FG), Ljubljana, 2015, pp. 1-8, doi: 10.1109/FG.2015.7163132) discusses a multi-sensor system for dynamic car-driver hand-gesture recognition, using a short-range radar, a color camera, and a depth camera, which together make the system robust against variable lighting conditions.

### SUMMARY

The matter for protection is defined by the claims.

### BRIEF DESCRIPTIONS OF DRAWINGS

FIG. 1 is a system diagram for a system for providing a radar-based gestural interface.
FIG. 2 is an exemplary illustration of classification accuracy tests for a system providing a radar-based gestural interface.
FIG. 3 is an exemplary illustration of primary symbolic gestures.
FIG. 4 is an exemplary illustration of secondary vocabulary gestures.
FIG. 5 illustrates an exemplary system providing a gestural interface in vehicles.
FIG. 6 illustrates an exemplary graph of a memorability of gestures.
FIG. 7 illustrates an exemplary graph of a volume of training data.

Like reference numbers and designations in the various drawings indicate like elements.

### DETAILED DESCRIPTION

A system for providing a gestural interface in vehicles includes an automotive gestural interface that uses radar to enable sub-millimeter interaction and control for in car mobile phones through open-air and hands-on-the-steering-wheel gestures. The system can use a gestural vocabulary for in-car mobile devices to reduce driver distraction using radar based hardware.

The system providing the gestural interface can provide new possibilities that were not previously possible or reasonable with cameras for in-car gestural interfaces including: stable usability independent of lighting and atmosphere, a small 9x9mm form factor, resistance to optical occlusions, and increased privacy, which is typically problematic for camera technologies.

The system can use a gestural language that is intuitive to learn and easy to perform in a driving scenario with minimal cognitive load. In certain aspects, the gestural language is based on a survey to find preferred mobile services while driving. As such, the gestural language can be iteratively designed using interface gestures that are both recognizable and memorable. In certain aspects, the gestural language can be contextually aware and include modalities achieving greater than 97% accuracy.

The system providing a gestural interface in vehicles can be a wireless enabled aftermarket device that can be implemented in a car for a hands on the steering wheel interactions to decrease driver distraction.

This alone may not be a problem, but compounded with the exponential growth of mobile phone usage for all forms of life from entertainment (including music and videos), to professional necessity for work and general communication, issues with distracted driving are taking place. It was reported in 2014 that the average employed adult has "over 31 hours of activity in a day." The figure of 31 hours of activity was reported due to the fact that in tracking the activity of the participants, the days of the participants were highly multitasked with multiple activities performed at once, a majority of which involved mobile phones or computers.

The new attachment and ubiquity of mobile phones can ultimately affect driving positively (due to instant access to navigation information and entertainment), as well as negatively (when the driver's eyes are distracted from the road). It was reported by the NHTSA that at any given daylight moment across America, approximately 660,000 drivers are using cell phones or manipulating electronic devices while driving, a number that has held steady since 2010.

Until self-driving cars become the norm, drivers are faced with a series of either antiquated or transitional technologies that cause significant challenges. For example, driver face challenges posed by antiquated head units. Antiquated head units can include older dashboards that may be functional in terms of natural haptic feedback from knobs and buttons, but can fail when users need to look away from the road to find them. Additionally, the antiquated head units may not meet user needs for music selection, phone calls, or dynamic functionality in a time of ultimate customizability. In another instance, original equipment manufacturer (OEM) interfaces can posed a challenge to drivers. Over the average lifespan of a new automobile (8 years or 150,000 miles) drivers are faced with—once innovative—hardware and software solutions that are difficult to upgrade with the pace of mainstream technology adoption. Further, OEM touch screen units can provide challenges to drivers. In car touch screens provide dynamic controls and content, but require the most visual attention from their complete lack of touch or haptic feedback. Additionally, mobile phones can pose challengers for drivers. Often, drivers opt to use their mobile phone for a majority of tasks while driving. These tasks of music selection, navigation, phone calls, etc. can all create distractions when a driver is operating a vehicle.

The system providing a gestural interface in vehicles contributes to and extends the effort to reduce driver distraction through alternative user interfaces for driving. The system can use radar as a gestural input device inside automobiles. The use of radar as a gestural input device can include an entirely radar-based standalone sensor for full interaction and be user-centric by design.

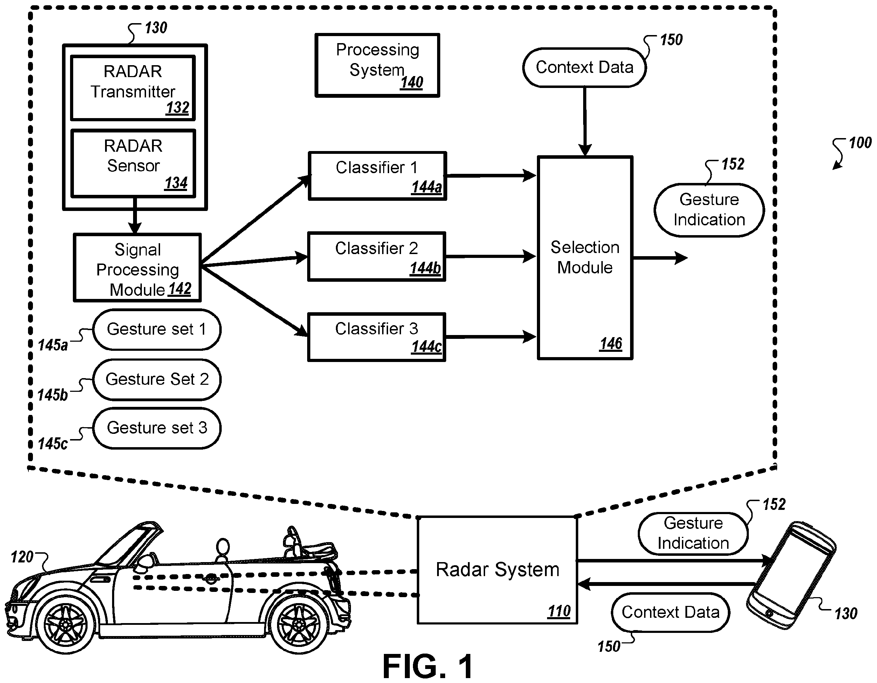

FIG. 1 is a system diagram for a system 100 for providing a radar-based gestural interface. As shown in the figure, the system includes a radar gesture system 110 that can be used in a vehicle 120. The radar system 110 can be used to detect and interpret gestures of a person in the vehicle. For example, at least portions of the radar gesture system 110 can be mounted to or integrated into the steering wheel or dashboard area of a car, truck, or other vehicle. The radar components of the system can be positioned so that finger and hand movements of the driver in the area of the steering wheel can be detected as control gestures for a computing system. In particular, the radar system 110 can be configured to detect movements made while the driver's hands are still in contact with the steering wheel. The radar system 110 detects the gestures, and then interprets the detected movements to select a command for a computing device 130, which can be a mobile device separate from the vehicle, such as a user's phone, tablet computer, laptop computer, wearable device, navigation device, etc., or can be a computing system integrated into the vehicle 120, such as an in-dashboard navigation unit, control system or control panel of the vehicle 120, or other information or entertainment (infotainment) system of the vehicle 120.

The radar system 110, or at least the radar subsystem 130, can be placed or mounted in the interior or cabin of the vehicle, arranged to detect movement and gesture in an area between the steering wheel and the user's chest. The volume in which the radar system 110 detects gesture input can include some or all of the steering wheel, to include input of finger and hand movements on or around the steering wheel. The radar subsystem 130 can be oriented to transmit and receive radar signals through an opening in the steering wheel, and around at least a top portion of the steering wheel.

In some implementations, the system 100 providing a gestural interface in vehicles can include the radar system 110 as a standalone radar-based sensing module for gestural control of a mobile phone or other user device, and/or for a built-in infotainment system (e.g., navigation system, stereo system, etc.) of the vehicle 120. The gestural control can be based on a gestural language inspired by sign language symbols for in-car mobile use. The gestural language can be derived from a shared gestural vocabulary to be used across various applications between different devices such as smartphones, tablets, computers, and the like. The system providing a gestural interface in vehicles can include a select set of modalities necessary for driving, as surveyed by users. The system can ultimately balance a gestural UI with technologically feasible radar-based sensing.

The radar system 110 includes a radar transmitter 132 and a radar sensor 134 to provide the gestural interface. In some implementations, the radar transmitter 132 and the radar sensor 134 can be integrated into a single chip 130. The radar transmitter 132 and the radar sensor 134 can provide a sensing mechanism that provides robust, high-resolution, low power, miniature gesture sensing technology based on millimeter wave radar. When implemented at millimeter wave RF frequencies, the entire sensing mechanism can be designed as a radar chip: a miniature, low power device that has no moving parts and can be manufactured inexpensively at scale.

In some implementations, the radar system 110 emits electromagnetic waves in a broad beam. Objects within the beam scatter this energy, reflecting some portion back towards the radar antenna. Properties of the reflected signal, such as energy, time delay, and frequency shift capture rich information about the object's characteristics and dynamics, including size, shape, orientation, material, distance, and velocity.

In some implementations, the radar system 110 tracks and recognizes dynamic gestures expressed by fine motions of the fingers and hand. This can be done with a single chip sensor 130. Unlike traditional radar sensors, this type of sensing mechanism does not require large bandwidth and high spatial resolution. In fact, the spatial resolution can be coarser than the scale of most fine finger gestures. Instead, the radar system 110 uses sensing principles rely on motion resolution by extracting subtle changes in the received signal over time. By processing these temporal signal variations, the radar system 110 can distinguish complex finger movements and deforming hand shapes within its field. Thus, while spatial resolution may be relatively low, the temporal resolution may be high to accurately indicate velocity and changes in position.

In some implementations, the software for the radar system 110 includes a gesture recognition pipeline which is hardware agnostic and can work with different types of radar. The pipeline implements several stages of signal abstraction: (i) from the raw radar data to signal transformations, (ii) core and abstract machine learning features, (iii) detection and tracking, (iv) gesture probabilities, and finally (v) UI tools to interpret gesture controls.

The radar system 110 includes a processing system 140 that includes one or more processors, one or more data storage devices storing executable instructions, and/or other processing components. This processing system 140, along with other hardware and software if desired, can implement the functions described and illustrated for a signal processing module 142, classifiers 144a-144c, and a selection module 146.

The signal processing module 140 can obtain real-time signals from the radar subsystem 130. The signal processing module 140 can apply signal transformations and output the results of the transformations, for example, to generate high-precision position and motion data. For example, the signal processing module 140 may apply transformations to each radar measurement to determine shapes and positions of objects relative to the radar sensor. Similarly, the signal processing module 140 may compare different measurements and track changes over many different measurements to determine the direction and speed of movement of detected objects. Thus, the signal processing module can extract, from the raw radar data stream, features representing the position of objects detected, the size of objects detected, the shape of objects detected, the rate and direction of movement of objects detected and so on. The signal processing module 140 may use Doppler processing techniques, Fourier transforms, and other techniques to generate feature values representing radar signals that have been reflected back to the sensor and detected. Thus, in response to the incoming stream of radar sensor measurements, the processing system 140 can output the results of signal transformations, including high-precision position and motion data. This may be provided as a stream of feature values, where each set of feature values represents one or more measurements of the radar sensor 134. In some implementations, a set of predetermined core radar features are used, and the output features represent the mean, standard deviation, sum, and absolute sum for each of the core radar features. For example, with 8 core radar features, a total of 32 feature value outputs may be provided for each measurement. The feature values determined for a given measurement or frame can be based on a set of measurements within a predetermined window of time, e.g., the prior 5, 10, or 50 measurements. The sensor 134 and the signal processing module can operate at any appropriate frame rate, for example, frame rates from 100 to 10,000 frames per second.

The feature values or other output data of the signal processing module 142 can be provided to multiple machine learning classifiers. Multiple classifiers 144a-144c are used in parallel to maximize responsiveness and accuracy. Each of the multiple classifiers can be trained to detect a different set of gestures. For example, a first classifier 144a may be trained to recognize a specific set of gestures in a first gesture set 145a, a second classifier 144b may be trained to recognize different set of gestures shown as a second gesture set 145b, and a third classifier 144c may be trained to recognize yet a different set of gestures shown as a third gesture set 145c. By limiting each classifier 144a-144c to a specific set of gestures, the classifier can learn to accurately distinguish among the small set of gestures with a small and computationally efficient model. These classifiers 144a-144c can each receive features from the signal processing module 142 in parallel and process the features concurrently. In some implementations, each classifier 144a-144c receives the same set of features even though each is configured to recognize a different set of gestures 145a-145c. The different gesture sets may be completely distinct and non-overlapping, or in some implementations may include one or more gestures in common.

Each gesture set 145a-145c and its corresponding classifier 144a-144c corresponds to a particular task, context, or operating mode. For example, in a hierarchical interface, an initial or primary state may have one set of options for a user to select, and each of these options may have a different corresponding gesture assigned. Selection of one option from the primary state enters a mode or portion of the interface where a secondary set of options are available, and each of these options may correspond to a different gesture. In this manner one gesture set and classifier represents the gestures for the primary state, and a second gesture set and classifier represent the gestures for the secondary state. In this manner, each state of an interface having a different set of options available for the user may have a corresponding gesture set and classifier.

For example, the classifiers 144a-144c may be implemented as three decision trees or random forest classifiers used in the classification of the gestures. The classifiers 144a-144c can respectively correspond to primary symbolic gestures, phone call gestures, and secondary vocabulary gestures. The primary symbolic gestures may represent operating modes for the computing device or types of tasks that the user may want to perform, e.g., initiate phone call, send a text message, play music, and start GPS. Each of these options may correspond to a distinct, predetermined gesture movement. Once the user performs the appropriate gesture to select one of these options, secondary vocabulary gestures become available, e.g., controls to move left in a list, move right in a list, select a current item, or navigate back (e.g., to the primary interface state). Another set of gestures and a corresponding classifier may be used for gestures in another mode of a computing device, such as a mode in which an incoming call is being received. In this mode, a set of gestures corresponding to answering the call or dismissing the call may be the available options. Depending on the interface and configuration of the computing device, different selection or navigation gestures may be defined, and these gestures (e.g., the hand motions and positions representing the gestures) may be the same or may be different for the various interface states.

As noted above, the three classifiers 144a-144c run concurrently. The outputs of each classifier 144a-144c are an indication of the most likely gesture from among the gesture set for the classifier. This may be expressed as an indication of a specific gesture being recognized, or as probabilities for each of the gestures in the corresponding gesture set, or in another form. A selection module 146 receives the outputs of the classifiers 144a-144c and also receives context data 150 about the current state or mode of the computing device 130. Based on the context data 150, the radar system 110 selects the output from one of the classifiers 114a-114c to use in interpreting the user input gesture. The selection module 146 then determines an indication of the user input gesture. For example, as shown in FIG. 1, the selection module 146 can output a gesture indication 152 indicating the identified gesture. In addition, or as an alternative, the radar system 110 may indicate a command corresponding to the identified gesture, for example, by sending a control instruction to change the operation of the computing device 130 based on the identified gesture.

The radar system 110 may communicate with the computing device 130 using a wired interface or a wireless interface (e.g., Bluetooth, Wi-Fi, etc.). The computing device 130 may periodically provide data indicating the current mode or interface state of the computing device 130. For example, each time the mode of the computing device 130 changes, the computing device 130 may indicate the change to the radar system 110. As another example, the mode may be indicated at regular intervals, e.g., each second, every 5 seconds, etc. As another example, the radar system 110 may query the computing device 130 to obtain information indicating the current operating mode of the device.

The operating modes indicated correspond to the different gesture sets 145a-145c. For example, a mode allowing selection from among music playback, navigation, initiating a call, or other options may be considered a first or primary mode of operation, corresponding to gesture set 145a. When the context data 150 indicates that the computing device 130 is in this mode, the selection module 146 will use the output of the first classifier 144a and ignore the outputs of classifiers 144b, 144c. The result is that the user gestures will only be identified from among the gestures in the first gesture set 145a, which are the set of gestures relevant to the primary operating mode. By limiting the set of gestures that are expected to those actually relevant to the computing device, and using a classifier 144a specifically trained to distinguish among that specific set of gestures, the radar system 110 can avoid false identification of gestures that are not applicable and can use a simple, fast, and computationally efficient model to distinguish among the small set of gestures.

As another example, when the computing device 130 is in a mode for navigation, or a mode for music playback, the computing device 130 can indicate this in the context data 150. In some implementations, the set of gestures relevant to multiple modes can be the same. In other words, whether in music playback mode or navigation mode, the same gesture set 145b may be represent the full set of options available to the user. Accordingly, the context data 150 may simply indicate that one of multiple secondary modes of operation is currently in use, without specifically indicating which of the multiple secondary modes is being used. When the context data 150 indicates that a secondary mode is the current operating mode, the selection module 146 uses the output from the second classifier 144b, which recognizes a different set of gestures than the other classifiers 144a, 144c. The selection module 146 thus determines the most likely gesture from among the set of gestures in gesture set 145b from the output of classifier 144b. In a similar manner, if the context data 150 indicates that a third operating mode is active on the computing device 130, such as when a phone call is incoming, then the selection module will use output of the classifier 144c to select a gesture from among gesture set 145c as the identified gesture.

In some implementations, the selection module 146 performs other processing of the classifier outputs. For example, the selection module 146 or another post processing module may smooth the data of the classifiers by skipping frames or adding a buffer of time to the beginning of each frame, so that each determined gesture may be cross-checked for accuracy. As another example, the selection module 146 may average probabilities or other outputs over may frames, e.g., over a particular number of frames or over a particular amount of time, to increase accuracy and reliability. As noted above, radar measurements can be made at frame rates from 100 to 10,000 frames per second. A stream of gesture indications 152, e.g., the gesture labels or instructions indicated, can be provided at the same rate, e.g., one indication per sensor data frame, or at a lower rate. For example, 10 or 100 frames of data and corresponding classifier outputs may be used to generate each gesture indication 152 provided to the computing device 130. In addition, when the user is not performing a gesture, or when a probability score or confidence score for all gestures is less than a threshold, the radar system 110 may indicate that no gesture is currently being performed, or may simply not provide any gesture indication 152 until a recognizable gesture is detected.

In response to receiving the gesture indication 152, the computing device 130 can perform an associated action. For example, the computing device 130 can change operating modes, make selections, traverse items in a list, or perform other operations corresponding to the identified gestures.

In some implementations, the radar sensor chip 130 is a fully integrated, low-power radar operating in the 60-GHz ISM band. Different modulation architectures can be used, for example, a Frequency Modulated Continuous Wave (FMCW) radar, and/or a Direct-Sequence Spread Spectrum (DSSS) radar. For either technique, the entire radar system can be integrated into the package, including multiple beamforming antennas that enable 3D tracking and imaging with no moving parts.

Potentially the fastest growing option for distractionless driving within cars is the prevalence of voice-controlled interfaces. Although voice-controlled interfaces currently appear to be one of the better options for safer driving, they have limitations including specific control of settings such as volume controls as well as limited contextual understanding. While voice technology is drastically improving at a high rate, voice technology is most commonly built into the car itself. And with the average lifespan of cars at 8 years or 150,000 miles users are quickly stuck with out-of-date technology or are required to keep updating their built-in systems. Although efforts like Android Auto aim to move voice technologies into the mobile phone with driving focused interfaces, these efforts are not yet widely available.

Another potential disadvantage of voice based interfaces is the social aspect of using it. Typically voice technologies are used in private, as it would be strange to use a voice-controlled assistant interface while with friends and disturb conversations. Socially speaking, the misunderstanding of words (especially for users with accents) is particularly frustrating.

In certain aspects, the radar chip 130 can include measurements between 9x9mm and 12x12mm. Radar chips can be built specifically for gesture interaction sensing. They are small enough to promise truly ubiquitous gesture interaction across a very broad range of applications. They can be used in many types of environments, including but not limited to traditional devices (such as mobile phones, tablets and laptops), Internet of Things (IoT) devices and car interiors.

The radar sensor of the system 110 can be uniquely suitable for automotive context, as a radar-based technology allows for sensing and stability features that improves upon past technologies. Unlike camera based systems, the sensor may not be affected by the extreme lighting and atmospheric conditions found in car interiors. The sensors can be small in size so that they can be placed in almost any location in the car interior without obstructing the driver or adding visible components to the car interior. The sensor works through non-metallic materials, meaning that there is more freedom for placement of the sensor without worry of obstruction (a major problem with camera sensing). Privacy concerns inherent in camera based systems do not apply to the sensor. Overall the controlled environment of the car interior, in which a fixed location of the driver can be assumed, lends itself to robust gesture detection. To further optimize the robustness of the system, multiple sensors can be placed around the space in which gestures are performed.

The radar sensor chip 130 can be fast and accurate enough to track inputs at up to 10,000 frames per second and detect submillimeter motion. Range, velocity and motion are key to radar-based gesture interaction: the sensor does not build a map of its environment, but it can accurately detect and track multiple motion components caused by a hand moving within its field. For sensor enabled interactions, gestures with a clear motion component are determined by the system rather than gestures that are expressed as hand shapes.

The system providing the gestural interface can use gestures based on virtual buttons rather than physical buttons. In some aspects, the gesture can be performed when the hands of the driver remain in contact with the steering wheel of the car. The system can use a mobile phone located in the car rather than outdated dashboards or other interfaces built into the vehicle. Additionally, the use of the mobile phone allows for an entirely new market of drivers not wanting to replace an entire head unit if they already owned a car.

The system can include contextually limited features to keep the interface functional. Thus, by not overloading users with extra gestures, the number of gestures can be limited at any given time to only permit gestures that are relevant to the user's needs at a particular moment in time. Further, the system can include a shared gestural vocabulary that can be similar to gestures used on other devices such as mobile phones or tablets. The shared gestural vocabulary can be similar to swipes, zooms, clicks, and the like. Additionally, the shared gestural vocabulary can include a new but equally literate form of radar vocabulary gestures.

The system can include an intuitive interface that does not force users to learn a new abstract gestural langue, by leveraging a symbolic language that users already know culturally. The symbolic language can be limited in its functionality so that it remains safe during driving and easily recallable without distraction. The system can also limit phone functionality by keeping drivers less distracted by unnecessary features, streamline a menu system of the system providing a gestural interface in vehicles to improve usability, and include a relatively small classification set to be technically functional.

In defining the classification set, otherwise known as feature set, a survey may be conducted. In the survey, 200 drivers who are 21 years or older and own or have access to an automobile and drive 3-4 times a week may be asked: "When driving, what three mobile services are most important to you? Navigation, music, phone calling, SMS/texting, search, email, or none of the above." The results of the survey from most popular to least popular can include: navigation, music, phone calling, SMS/texting, search, email, none of the above.

Thus, in accordance with the survey, the system providing a gestural interface in vehicles can include a limited feature set including modalities such as navigation, music, phone calling, and texting. Each of the modes may be accessible from a menu screen of the gestural user interface of the system providing a gestural interface in vehicles. The modes may be accessible from the menu screen at any time, in which the user can provide a particular gesture to enter one of the modes, and ultimately complete a desired task.

The gesture set of the system can include different types of gestures such as primary symbolic gestures and secondary vocabulary gestures. The primary symbolic gestures can be defined as a hand gesture that may already be known culturally for one reason or another and is already in circulation and use by users. One example of the primary symbolic gesture can be the "I'm on the phone gesture." On the other hand, secondary vocabulary gestures can include a set of gestures that work cross app as a ubiquitous gesture set including gestures such as: swipe left, swipe right, select, back, etc.

The system is designed so that a user enters a specific mode, such as navigation, by performing a primary symbolic gesture, and then once inside a mode can navigate using secondary vocabulary gestures. Of importance to note, is the difference between primary symbolic gestures and secondary vocabulary gestures as a system design solution for UI navigation, but equally it simplifies many technical hurdles. By limiting the gestural functionality of the system at any given time, the classification accuracy can also be drastically improved by reducing the classification set to a smaller range of gestures at any given time, such as two to four gestures rather than eight to ten gestures overall.

The primary symbolic gestures can be based on colloquial gestures. By focusing on a limited modality defined by users, a set of hand gestures may be determined that symbolically represent each of the determined modes while still appearing unique in terms of radar signature. The radar signature of the gestures will be discussed further herein.

Using a predetermined set of gestures, a survey may be conducted to determine preferred gestures. The survey can include four possible gestures for each determined mode. The survey may provide animations of the possible gestures to participants of a particular age category and ask, "From the animations below, the simplest hand gesture symbolizing a 'phone call' is which of the following?" In certain aspects, the survey may find that a majority of preference for a specific gesture in each category. As such, the preferential gesture corresponding to each gesture may then be determined to be the primary symbolic gesture for that particular mode.

In order to determine the gestures as they are detected by the sensor or radar chip, signal transformations such as range dopplers, micro-dopplers, spectrograms, and the like, can be examined. The examination of the signal transformations can be used to determine if each of the gestures are recognizable and/or unique to one another.

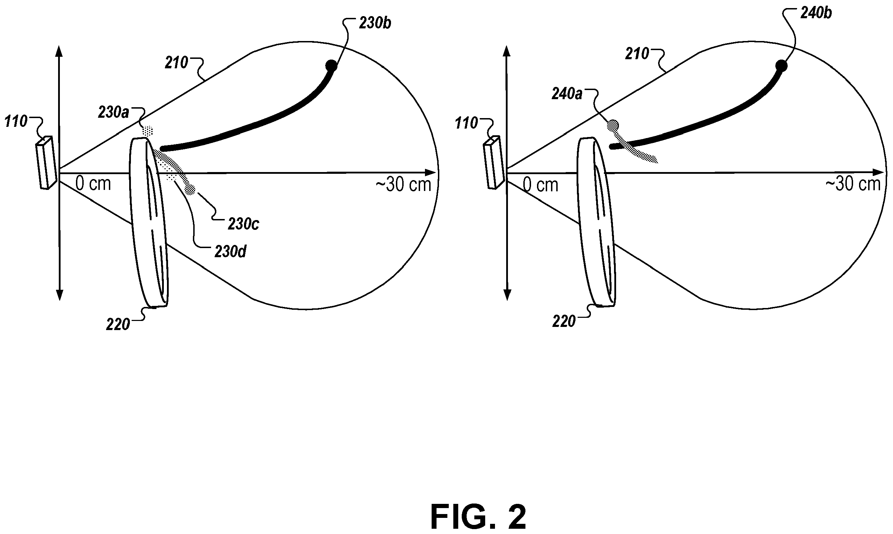

FIG. 2 is an exemplary illustration of classification accuracy tests of a system providing a gestural interface in vehicles. The classification accuracy tests portray how each gesture may be unique in relation to one another by distinguishing features such as: velocity, acceleration, distance from sensor, magnitude of change in motion, length of gesture, approaching/receding directions. Classification accuracy tests are used to gauge if the movements corresponding to the gestures are detectable. Additionally, the classification accuracy tests are important in providing an understanding of how the gestures remained unique in movements, time, directionality, and proximity to the sensor or radar chip. The classification accuracy tests of FIG. 2 further define the gesture space and unique of each designed gesture aiding both technical feasibility but also system designs/mental models for the user.

In FIG. 2, two examples of gestures sets are illustrated, with their spatial positions indicated within the volume 210 near the steering wheel 220 where the radar system 110 can detect gestures. The first set of gestures includes four gestures 230a-230d, each having a different length, position, and trajectory within the volume 210. These gestures represent one gesture set, recognized by one classifier of the radar system 110. The second set of gestures includes two gestures 240a-240b, which represent a different gesture set identified using a different classifier. For each of these gestures, the dot along the path represents the terminal point of the gesture, e.g., where the user's hand pauses, or the speed of movement decreases below a threshold speed.

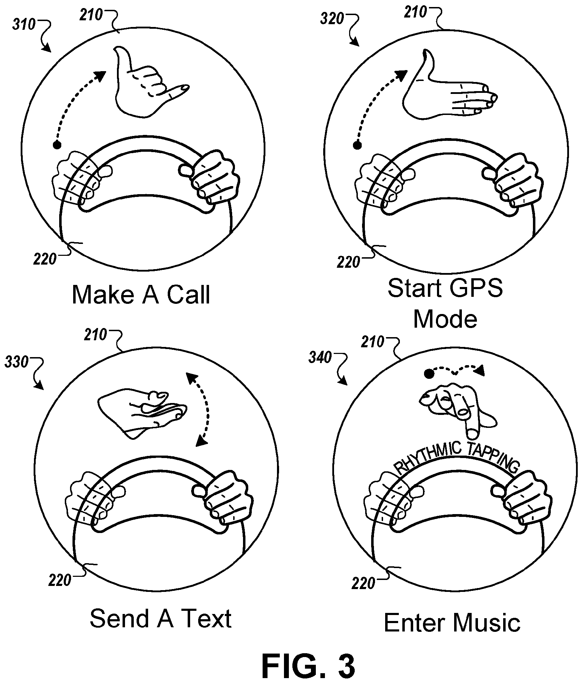

FIG. 3 is an exemplary illustration of primary symbolic gestures 310, 320, 330, 340. Each of the gestures is shown relative to the position of the steering wheel 210, and within the volume 210 detectable by the radar system 110. The primary symbolic gestures can be determined based on user evaluation of gestures as well as the feasibility of each gesture's radar signature. For example, the gesture 340 corresponding to the music mode can include rhythmically tapping on the steering wheel, as you would while listening to music. Thus, the music mode would be initiated. In another example, the gesture 310 corresponding to the phone call mode can include making the universal "call me" gesture. As such, the user may be able to answer an incoming call, or make a call out to a particular contact. In certain aspects, upon entering the call mode, a user can either select a favorite contact and call that particular contact, or the user can speak verbally to identify the particular contact. In another example, the gesture 330corresponding to texting can include making a quack or "yada yada yada" hand gesture. Thus, the system may be configured to initiate the texting mode and compose a new text or open "reply mode" if a recent text just came in. Further, the gesture 320 corresponding to GPS mode can include holding a hand up as if looking at a map on the hand. As such, the GPS or navigation mode will be initiated.

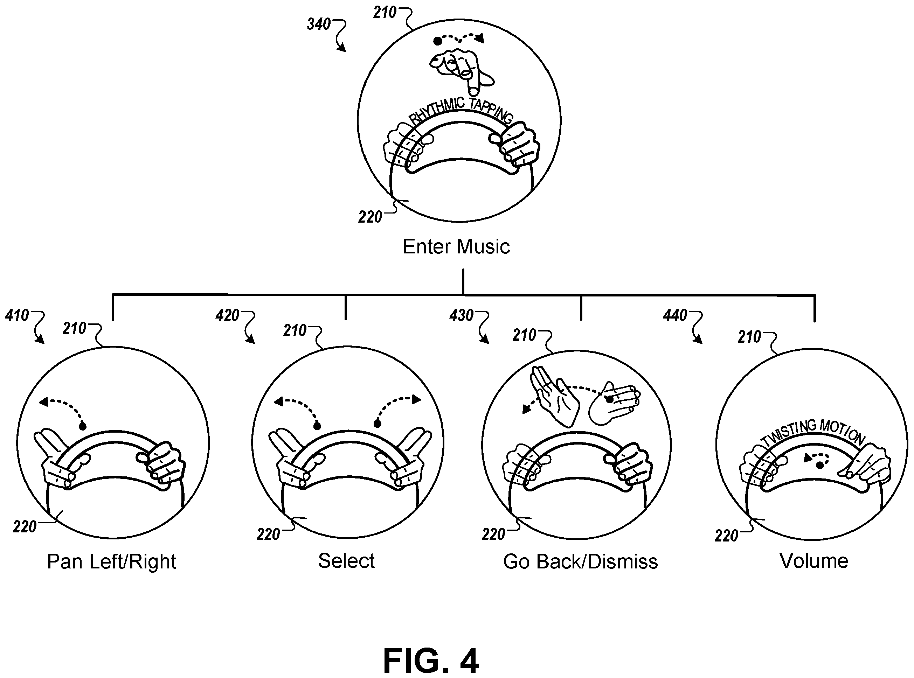

FIG. 4 is an exemplary illustration of secondary vocabulary gestures 410, 420, 430, 440. The secondary vocabulary gestures can be determined based on symbolic relevance as well as technical feasibility. Within any given application it is important to have a shared gestural language, therefore reducing cognitive strain of memorizing extra hand gestures. Similar to a mobile phone's current zoom and pinch gestures, the secondary vocabulary gestures can include an equivalent set for driving control over mobile phones. For example, the gesture 410 corresponding to panning left or right can include flicking two index fingers while holding onto the steering wheel of a car. Thus, the gestural interface can be panned to the left and to the right via such gesture. In another example, the gesture 420 corresponding to selecting a particular entry can include flicking both index fingers forward with both hands simultaneously. In a further example, the gesture 430 corresponding to going back/dismissing an option can include flicking away from the steering wheel. In this instance, a gesture of disapproval, such as flicking away from the steering wheel, may be used to reject calls or go back to the home screen of the gestural user interface. Another example may be the gesture 440 corresponding to volume adjustment. This gesture can include gently moving index and thumb fingers back and forth, as if over a knob, to turn music or phone call volume up or down.

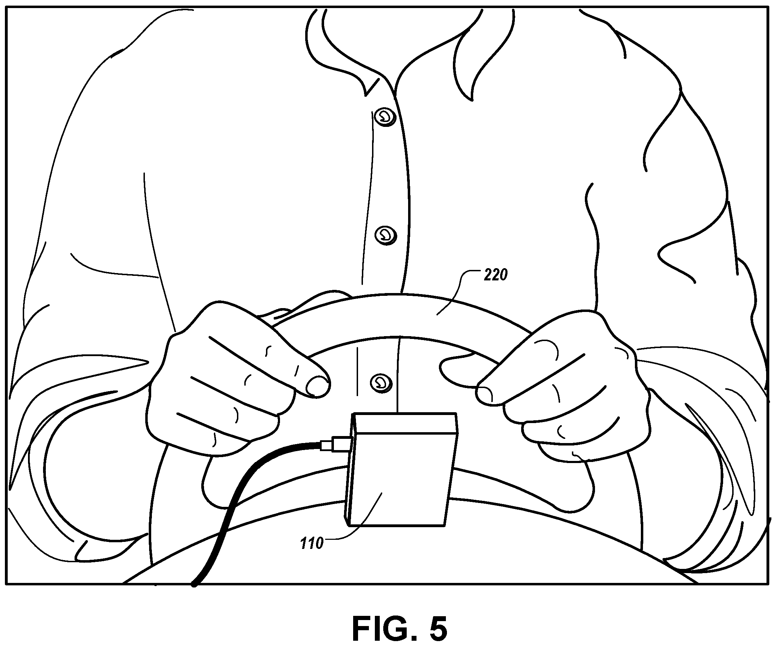

FIG. 5 is an exemplary illustration of a system providing a gestural interface in vehicles. The system providing a gestural interface in vehicles can include the sensor or radar chip 130 of the radar system 110 placed behind the steering wheel 210 of a car. The placement of this sensor can be determined based on the interior of the car, such as a sports car interior or a conventional sedan interior. While performing random hand gestures and movements inside the car, the sensor can be monitored at various locations to gauge signal responsiveness, and therefore determine the sensor location most suitable to the particular car type. The sensor can be placed centered five inches behind the steering wheel, "pointing" through the opening of the steering wheel. From this vantage point the sensor points directly at the user's chest and is able to read both gestures from hands on the steering wheel as well as in open air between the steering wheel and the user's chest. The steering wheel may be located 30 inches from the chest of the user. In some aspects, the sensor may be placed ad hoc in this position by the user and connected via BLE to a mobile phone on the dashboard of the car. By connecting the sensor to the mobile phone via BLE, there would be no need to embed the gesture interface technology within the car.

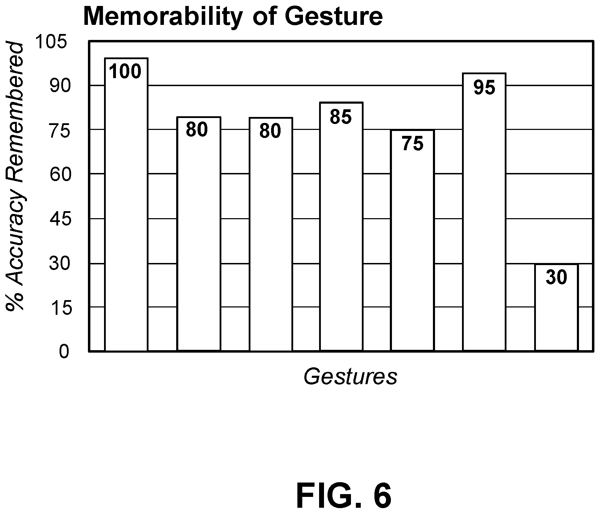

FIG. 6 illustrates an exemplary graph of a memorability of gestures. It can be important for the system to include symbolic gestures that are either known inherently or learnable in a way that they become immediately memorable. By reducing the cognitive strain when mentally associating gestures to UI controls, users remain less distracted and are able to place more focus on driving. To test the memorability of a particular gesture set, the initial participants used to determine the particular gesture set may be shown the results of the survey and taught each gesture that was chosen to be associated with the modes. The initial participants may then be asked at a later date to identify the mode corresponding to each of the chosen gestures. The results may indicate which gestures are intuitive to the users and as well as which gestures are not as easy to remember.

The data may be collected based on participants seated at a driving simulator and who are introduced briefly to the setup of the system and the corresponding gestures. The participants may be instructed how to do each gesture in the set, and given time to practice the gesture before feeling comfortable performing the gestures while holding the steering wheel. The participants may then be asked to perform the gestures and visually recorded at regular intervals. In some aspects, the gestures may be requested in random order as the capture the gestures more organically.

The cross-user accuracy of each gesture may be tested by collecting a predetermined number of repetitions from each participant per gesture set. Each repetition can include a sample such as a buffered recording for 700 milliseconds to capture the length of the entire gesture. The samples may be used by a gesture recognition pipeline. The gesture recognition pipeline can be performed by the radar chip, the mobile phone, processing circuitry of the car, or any combination thereof. The gesture recognition pipeline can include a series of stages signal abstractions and transformations. In an aspect, the radar chip performs the gesture recognition pipeline and a predetermined number of radar features are extracted from the pipeline. The radar features can be used to compute the mean, standard deviation, sum and absolute sum of each radar feature. As such, if eight core radar features are chosen, 32 total radar features will be collected after the computations are completed. Multiple random forest classifiers, e.g., multiple different sets of decision trees, can be used for classification of these features. The collected data of the features can be used to train and test the classifier on the various rounds of data. In certain aspects, the classification accuracy of the primary symbolic gestures, the phone call gestures, and the secondary gestures and surpass 97%.

In certain aspects, three random forest classifiers may be used in the classification of the gestures. The three random forest classifiers can respectively correspond to primary symbolic gestures, phone call gestures, and secondary vocabulary gestures. The three random forest classifiers can run simultaneously, however, the current context of the gestural user interface may dictate which algorithm to pull data from at a given point in time. For example, if the UI has determined that the system is in music mode, the UI may pull data from the random forest classifier corresponding to the secondary vocabulary gestures to further determine the user's selection of music. In another example, if the UI has not determined an initial mode (according to the primary symbolic gestures), the UI may pull data from the random forest classifier corresponding to the primary symbolic gestures to determine which mode the user wishes to enter. The results of the random forest classifiers may be input to a post processing module. The post processing module may smooth the data of the random forest classifiers by skipping frames or adding a buffer of time to the beginning of each frame, so that each determined gesture may be cross-checked for accuracy.

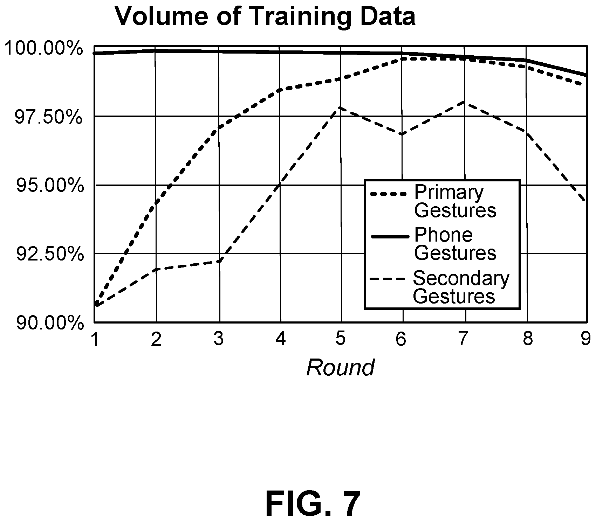

FIG. 7 illustrates an exemplary graph of a volume of training data. The volume of training data includes a collection of data corresponding to three separate portions of the gestural user interface: primary symbolic gestures (call, send text, play music, start GPS), phone call gestures (answer, dismiss), and secondary vocabulary gestures (left, right, select, back). To account for differences in car dashboards, automobile sizes, and general variability, the random forest classifiers was run multiple times to understand how much training data is needed to create a reliable classifier.

The system providing a gestural interface in vehicles may use large training datasets to improve real time analysis. The system can be tailored to the type of car in which sensor placement may improve radar signatures corresponding to the provided gestures of the user. In some aspects, the training set of gestures may need to be altered according to the physical structure of each car dashboard. By placing the sensor in a location proximate to the steering wheel and in the vicinity of the chest of the user, the sensor may be able to determine a heart rate and respiratory rate of the user. The heart rate and respiratory rate of the user can further be used to determine stress levels of the user while driving. The system can be implemented with visual and audio cues that refrain from distracting the user while driving. For example, the audio cues may indicate to the user that contacts are being scrolled over when placing a call via secondary gestures in the phone call mode.

A number of implementations have been described. For example, various forms of the flows shown above may be used, with steps re-ordered, added, or removed.

Embodiments of the invention and all of the functional operations described in this specification can be implemented in digital electronic circuitry, or in computer software, firmware, or hardware, including the structures disclosed in this specification, or in combinations of one or more of them. Embodiments of the invention can be implemented as one or more computer program products, e.g., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a tablet computer, a mobile telephone, a personal digital assistant (PDA), a mobile audio player, a Global Positioning System (GPS) receiver, to name just a few. Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the invention can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the invention, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A method performed by one or more computing devices, the method comprising:
receiving, from a radar receiver (134) arranged to detect hand movement made in three dimensions by a driver of a vehicle (120) while hands of the driver remain in contact with, or in proximity to, a steering wheel (220) in an interior of the vehicle, movement data indicative of a hand movement made in three dimensions by the driver of the vehicle;
determining that the hand movement indicated in the movement data from the radar receiver corresponds to an initial gesture of the driver of the vehicle;
determining, based on the movement data from the radar receiver, that the initial gesture represents a particular gesture from among a first predetermined set of gestures for selecting an operating mode of a computing device, wherein the determining that the initial gesture represents a particular gesture from among a first predetermined set of gestures comprises:
processing input representing features of the movement data with multiple machine learning classifiers (144a, 144b, 144c) that operate concurrently, each of the multiple machine learning classifiers being configured to recognize initial gestures in a different predetermined set of gestures;
accessing context data (150) indicating a current operating mode of the computing device;
selecting one of the multiple machine learning classifiers based on the context data; and
determining that the initial gesture represents the particular gesture based on output from the selected machine learning classifier; and
in response to determining that the initial gesture represents the particular gesture:
causing the computing device to enter an operating mode corresponding to the particular gesture; and
determining, based on additional data from the radar receiver, whether subsequent hand movement of the driver represents a subsequent gesture from a second predetermined set of gestures that is different from the first predetermined set of gestures.

2. The method of claim 1, wherein determining that the subsequent hand movement represents the subsequent gesture from the second predetermined set of gestures comprises determining that the subsequent gesture represents the subsequent gesture from the second predetermined set of gestures based on output from a second classifier (144b) that is trained to recognize the subsequent gestures in the second predetermined set of gestures, the second predetermined set of gestures being different from the first predetermined set of gestures.

3. The method of any preceding claim, wherein determining that the initial gesture represents the particular gesture further comprises:
determining feature scores based on output of the radar receiver; and
providing the feature scores as the input to each of the multiple machine learning classifiers (144a, 144b, 144c), wherein the multiple machine learning classifiers have been trained to indicate likelihoods of occurrence of gestures in different predetermined sets of gestures.

4. The method of claim 1, wherein the multiple machine learning classifiers are decision trees.

5. The method of claim 4, wherein the decision trees are random forest decision trees.

6. The method of any preceding claim, wherein causing the computing device to enter the operating mode corresponding to the particular gesture comprises sending an indication of a user selection corresponding to the initial gesture to a mobile phone (130) in the vehicle over a wired or wireless interface.

7. The method of any preceding claim, wherein causing the computing device to enter the operating mode corresponding to the particular gesture comprises causing a mobile phone (130) to enter a mode for initiating calls, select music, text messaging, or navigation.

8. The method of any preceding claim, wherein the second set of predetermined gestures corresponds to a shared gestural vocabulary between a plurality of devices.

9. The method of any preceding claim, wherein the radar receiver is arranged within the vehicle to detect hand movements in a volume (210) that includes a space, a steering wheel (220) and the driver's chest, and wherein the movement data indicates movements of the driver's hands or fingers in the volume.

10. The method of any preceding claim, wherein the radar receiver is further arranged to detect movements of fingers of the driver while detecting hand movements made by the driver while the hands of the driver remain in contact with, or in proximity to, the steering wheel in the interior of the vehicle, and wherein the movement data is further indicative of finger movements of the fingers of the driver, on and around the steering wheel of the vehicle.

11. The method of any preceding claim, wherein the radar receiver and a radar transmitter (132) are located on a single chip.

12. A system comprising:
a radar transmitter (132) and a radar receiver (134);
one or more processors; and
one or more data storage devices storing instructions that, when executed by the one or more processors, cause the system to perform the operations of the method of any of claims 1-11.

13. The system of claim 12 wherein the radar receiver and the radar transmitter are located on a single chip.

14. One or more machine-readable media storing instructions that are executable by one or more processors to cause the operations of the method of any of claims 1-11 to be performed.

## Patentansprüche

1. Verfahren, das von einem oder mehreren Computergeräten ausgeführt wird, das Verfahren umfassend:
Empfangen, von einem Radarempfänger (134), der angeordnet ist, um eine Handbewegung zu erkennen, die in drei Dimensionen von einem Fahrer eines Fahrzeugs (120) ausgeführt wird, während die Hände des Fahrers in Kontakt mit oder in der Nähe eines Lenkrads (220) in einem Innenraum des Fahrzeugs bleiben, von Bewegungsdaten, die eine Handbewegung angeben, die in drei Dimensionen von dem Fahrer des Fahrzeugs ausgeführt wird;
Ermitteln, dass die in den Bewegungsdaten des Radarempfängers angegebene Handbewegung einer anfänglichen Geste des Fahrers des Fahrzeugs entspricht;
Ermitteln, basierend auf den Bewegungsdaten von dem Radarempfänger, dass die anfängliche Geste eine jeweilige Geste aus einem ersten vorbestimmten Satz von Gesten zum Auswählen eines Betriebsmodus eines Computergeräts darstellt, wobei das Ermitteln, dass die anfängliche Geste eine jeweilige Geste aus einem ersten vorbestimmten Satz von Gesten darstellt, umfasst:
Verarbeiten von Eingaben repräsentierenden Merkmalen der Bewegungsdaten mit mehreren maschinell lernenden Klassifikatoren (144a, 144b, 144c), die parallel arbeiten, wobei jeder der mehreren maschinell lernenden Klassifikatoren konfiguriert ist, anfängliche Gesten in einem anderen vorbestimmten Satz von Gesten zu erkennen;
Zugreifen auf Kontextdaten (150), die auf einen aktuellen Betriebsmodus des Computergeräts hinweisen;
Auswählen eines der mehreren maschinell lernenden Klassifikatoren basierend auf den Kontextdaten; und
Ermitteln, dass die anfängliche Geste die jeweilige Geste darstellt, basierend auf der Ausgabe des ausgewählten maschinell lernenden Klassifikators; und
in Reaktion auf das Ermitteln, dass die anfängliche Geste die bestimmte Geste darstellt:
Veranlassen des Computergeräts, in einen Betriebsmodus überzugehen, welcher der jeweiligen Geste entspricht; und
Ermitteln, basierend auf zusätzlichen Daten des Radarempfängers, ob eine darauffolgende Handbewegung des Fahrers eine darauffolgende Geste aus einem zweiten vorbestimmten Satz von Gesten darstellt, der sich von dem ersten vorbestimmten Satz von Gesten unterscheidet.

2. Verfahren nach Anspruch 1, wobei das Ermitteln, dass die darauffolgende Handbewegung die darauffolgende Geste aus dem zweiten vorbestimmten Satz von Gesten darstellt, das Ermitteln umfasst, dass die darauffolgende Geste die darauffolgende Geste aus dem zweiten vorbestimmten Satz von Gesten darstellt, basierend auf der Ausgabe eines zweiten Klassifikators (144b), der trainiert ist, die darauffolgenden Gesten in dem zweiten vorbestimmten Satz von Gesten zu erkennen, wobei der zweite vorbestimmte Satz von Gesten sich von dem ersten vorbestimmten Satz von Gesten unterscheidet.

3. Verfahren nach einem der vorhergehenden Ansprüche, wobei das Ermitteln, dass die anfängliche Geste eine jeweilige Geste darstellt, ferner umfasst:
Ermitteln von Merkmalsbewertungen basierend auf der Ausgabe des Radarempfängers; und
Bereitstellen der Merkmalsbewertungen als Eingabe für jeden der mehreren maschinell lernenden Klassifikatoren (144a, 144b, 144c), wobei die mehreren maschinell lernenden Klassifikatoren trainiert wurden, Wahrscheinlichkeiten des Auftretens von Gesten in verschiedenen vorbestimmten Sätzen von Gesten anzugeben.

4. Verfahren nach Anspruch 1, wobei die mehreren maschinell lernenden Klassifikatoren Entscheidungsbäume sind.

5. Verfahren nach Anspruch 4, wobei die Entscheidungsbäume Random-Forest-Entscheidungsbäume sind.

6. Verfahren nach einem der vorhergehenden Ansprüche, wobei das Veranlassen des Computergeräts, in den der jeweiligen Geste entsprechenden Betriebsmodus überzugehen, das Senden einer Angabe einer Benutzerauswahl, die der anfänglichen Geste entspricht, an ein Mobiltelefon (130) im Fahrzeug über eine kabelgebundene oder drahtlose Schnittstelle umfasst.

7. Verfahren nach einem der vorhergehenden Ansprüche, wobei das Veranlassen des Computergeräts, in den der jeweiligen Geste entsprechenden Betriebsmodus überzugehen, das Veranlassen eines Mobiltelefons (130) umfasst, in einen Modus zum Einleiten von Anrufen, Auswählen von Musik, Textnachrichten oder zur Navigation überzugehen.

8. Verfahren nach einem der vorhergehenden Ansprüche, wobei der zweite Satz von vorbestimmten Gesten einem gemeinsamen Gestenvokabular zwischen einer Vielzahl von Geräten entspricht.

9. Verfahren nach einem der vorhergehenden Ansprüche, wobei der Radarempfänger innerhalb des Fahrzeugs angeordnet ist, um Handbewegungen in einem Raum (210) zu erkennen, der einen Raum zwischen einem Lenkrad (220) und der Brust des Fahrers beinhaltet, und wobei die Bewegungsdaten Bewegungen der Hand oder der Finger des Fahrers in dem Raum angeben.

10. Verfahren nach einem der vorhergehenden Ansprüche, wobei der Radarempfänger ferner angeordnet ist, die Bewegungen der Finger des Fahrers zu erkennen, während er die vom Fahrer ausgeführten Handbewegungen erkennt, während die Hände des Fahrers in Kontakt mit oder in der Nähe des Lenkrads im Innenraum des Fahrzeugs verbleiben, und wobei die Bewegungsdaten ferner die Fingerbewegungen der Finger des Fahrers am und um das Lenkrad des Fahrzeugs angeben.

11. Verfahren nach einem der vorhergehenden Ansprüche, wobei sich der Radarempfänger und ein Radarsender (132) auf einem einzigen Chip befinden.

12. System, umfassend:
einen Radarsender (132) und einen Radarempfänger (134);
einen oder mehrere Prozessoren; und
eine oder mehrere Datenspeichergeräte, die Anweisungen speichern, die bei Ausführung durch den einen oder die mehreren Prozessoren das System veranlassen, die Operationen des Verfahrens nach einem der Ansprüche 1-11 durchzuführen.

13. System nach Anspruch 12, wobei sich der Radarempfänger und der Radarsender auf einem einzigen Chip befinden.

14. Ein oder mehrere maschinenlesbare Medien, die Anweisungen speichern, die durch einen oder mehrere Prozessoren ausführbar sind, um zu veranlassen, dass die Operationen des Verfahrens nach einem der Ansprüche 1-11 durchgeführt werden.

## Revendications

1. Un procédé réalisé par un ou plusieurs dispositifs informatiques, le procédé comprenant :
la réception, depuis un récepteur radar (134) agencé pour détecter un mouvement des mains effectué en trois dimensions par un conducteur d'un véhicule (120) tandis que les mains du conducteur restent en contact avec un volant de direction (220), ou à proximité de celui-ci, à l'intérieur du véhicule, de données de mouvement indicatives d'un mouvement de main effectué en trois dimensions par le conducteur du véhicule ;
la détermination que le mouvement de main indiqué dans les données de mouvement à partir du récepteur radar correspond à un geste initial du conducteur du véhicule ;
la détermination, sur la base des données de mouvement provenant du récepteur radar, que le geste initial représente un geste particulier parmi un premier ensemble prédéterminé de gestes pour sélectionner un mode de fonctionnement d'un dispositif informatique, dans lequel la détermination que le geste initial représente un geste particulier parmi un premier ensemble prédéterminé de gestes comprend :
le traitement d'une entrée représentant des caractéristiques des données de mouvement avec de multiples classificateurs d'apprentissage machine (144a, 144b, 144c) qui fonctionnent simultanément, chacun des multiples classificateurs d'apprentissage machine étant configuré pour reconnaître des gestes initiaux dans un ensemble prédéterminé différent de gestes ;
l'accès à des données de contexte (150) indiquant un mode de fonctionnement actuel du dispositif informatique ;
la sélection d'un des multiples classificateurs d'apprentissage machine sur la base des données de contexte ; et
la détermination que le geste initial représente le geste particulier sur la base de la sortie du classificateur d'apprentissage machine sélectionné ; et
en réponse à la détermination que le geste initial représente le geste particulier :
le fait d'amener le dispositif informatique à entrer un mode de fonctionnement correspondant au geste particulier ; et
le fait de déterminer, sur la base de données supplémentaires provenant du récepteur radar, si le mouvement de main subséquent du conducteur représente un geste subséquent à partir d'un second ensemble prédéterminé de gestes qui est différent du premier ensemble prédéterminé de gestes.

2. Le procédé selon la revendication 1, dans lequel la détermination que le mouvement de main subséquent représente le geste subséquent à partir du second ensemble prédéterminé de gestes comprend la détermination que le geste subséquent représente le geste subséquent à partir du second ensemble prédéterminé de gestes sur la base de la sortie d'un second classificateur (144b) qui est entraîné pour reconnaître les gestes subséquents dans le second ensemble prédéterminé de gestes, le deuxième ensemble prédéterminé de gestes étant différent du premier ensemble prédéterminé de gestes.

3. Le procédé selon l'une quelconque des revendications précédentes, dans lequel la détermination que le geste initial représente le geste particulier comprend en outre :
la détermination de scores de caractéristiques basée sur la sortie du récepteur radar ; et
la fourniture des scores de caractéristiques en tant qu'entrée à chacun des multiples classificateurs d'apprentissage machine (144a, 144b, 144c), dans lequel les multiples classificateurs d'apprentissage machine ont été entraînés pour indiquer des probabilités d'occurrence de gestes dans différents ensembles prédéterminés de gestes.

4. Le procédé selon la revendication 1, dans lequel les multiples classificateurs d'apprentissage machine sont des arbres de décision.

5. Le procédé selon la revendication 4, dans lequel les arbres de décision sont des arbres de décision de forêt aléatoires.

6. Le procédé selon l'une quelconque des revendications précédentes, dans lequel le fait d'amener le dispositif informatique à entrer dans le mode de fonctionnement correspondant au geste particulier comprend l'envoi d'une indication d'une sélection d'utilisateur correspondant au geste initial à un téléphone mobile (130) dans le véhicule sur une interface câblée ou sans fil.

7. Le procédé selon l'une quelconque des revendications précédentes, dans lequel le fait d'amener le dispositif informatique à entrer dans le mode de fonctionnement correspondant au geste particulier comprend le fait d'amener un téléphone mobile (130) à entrer dans un mode de lancement d'appels, de sélection de musique, de messagerie textuelle ou de navigation.

8. Le procédé selon l'une quelconque des revendications précédentes, dans lequel le second ensemble de gestes prédéterminés correspond à un vocabulaire gestuel partagé entre une pluralité de dispositifs.

9. Le procédé selon l'une quelconque des revendications précédentes, dans lequel le récepteur radar est agencé à l'intérieur du véhicule pour détecter des mouvements de main dans un volume (210) qui inclut un espace, un volant de direction (220) et le buste du conducteur, et dans lequel les données de mouvement indiquent des mouvements des mains ou des doigts du conducteur dans le volume.

10. Le procédé selon l'une quelconque des revendications précédentes, dans lequel le récepteur radar est en outre agencé pour détecter des mouvements des doigts du conducteur tout en détectant les mouvements des mains effectués par le conducteur tandis que les mains du conducteur restent en contact avec le volant, ou à proximité de celui-ci à l'intérieur du véhicule, et dans lequel les données de mouvement sont en outre indicatives des mouvements des doigts du conducteur, sur et autour du volant du véhicule.

11. Le procédé selon l'une quelconque des revendications précédentes, dans lequel le récepteur radar et un émetteur radar (132) sont situés sur une unique puce.

12. Un système comprenant :
un émetteur radar (132) et un récepteur radar (134) ;
un ou plusieurs processeurs ; et
un ou plusieurs dispositifs de stockage de données stockant des instructions qui, lorsqu'elles sont exécutées par les un ou plusieurs ordinateurs, amènent le système à réaliser les opérations du procédé selon l'une quelconque des revendications 1 à 11.

13. Un système selon la revendication 12, dans lequel le récepteur radar et l'émetteur radar sont situés sur une unique puce.

14. Un ou plusieurs supports lisibles par machine stockant des instructions qui sont exécutables par un ou plusieurs processeurs pour provoquer l'exécution des opérations du procédé selon l'une quelconque des revendications 1 à 11.
